# EUROPÄISCHE PATENTANMELDUNG

(11) **EP 4 442 604 A1**
(43) Veröffentlichungstag der Anmeldung: **09.10.2024**
(21) Anmeldenummer: 23166390.7
(22) Anmeldetag: 03.04.2023
(51) Int. Cl.: B65D 83/42

(54) **VENTIL ZUM BEFÜLLEN SOWIE ZUR SIMULTANEN ENTNAHME ZWEIER MEDIENKOMPONENTEN**

(71) Anmelder: Sika Technology AG, 6340 Baar (CH)
(72) Erfinder: BÜRKLE, Jochen, 71711 Steinheim an der Murr (DE)
(74) Vertreter: Sika Patent Attorneys

(57) **Zusammenfassung**

Die vorliegende Erfindung betrifft ein Ventil zum Befüllen und/oder Begasen einer ersten Medienkomponente in einen ersten Behälter und einer zweiten Medienkomponente in einen zweiten Behälter, der im Inneren des ersten Behälters anordenbar ist, und zur simultanen Entnahme der beiden Medienkomponenten aus den beiden Behältern, wobei das Ventil so ausgebildet ist, dass sich der erste Behälter und der zweite Behälter separat voneinander befüllen lassen, ohne dass dabei eine besondere Ausrichtung des Ventils erforderlich ist.

## Beschreibung

### Technisches Gebiet

Die vorliegende Erfindung betrifft ein Ventil zum Befüllen einer ersten Medienkomponente in einen ersten Behälter und einer zweiten Medienkomponente in einen zweiten Behälter, der im Inneren des ersten Behälters anordenbar ist, insbesondere angeordnet ist, und zur simultanen Entnahme der beiden Medienkomponenten aus den beiden Behältern. Die Erfindung betrifft auch ein Befüllverfahren eines Zwei-Medienkomponenten-Entnahmesystems, welches das erfindungsgemässe Ventil enthält.

### Stand der Technik

Beispielsweise für Polyurethanschäume in Aerosoldosen ist ein 2K-Ventilsystem (2K = Zwei-Komponenten) bekannt, welches es ermöglicht, aus einer Aerosoldose die beiden Komponenten auszutragen und ausserhalb dieser in einem Adapter zu vermischen.

Dieses bekannte Ventil wurde zu einer Zeit entwickelt, in welcher im Wesentlichen FCKW als Treibmittel für Aerosolprodukte eingesetzt wurde, wodurch die Anforderungen an Ventilsysteme bezüglich des Gasverlusts, der chemischen Beständigkeit an Ventilmaterialien, der Feuchtigkeitsdiffusion nach innen und die Nichtbrennbarkeit der Treibmittel noch völlig andere Rahmenbedingungen darstellten. Auch heute muss dieses kaum weiterentwickelte Ventil noch mit einem FKW als Treibmittel betrieben werden, da der Gasverlust mit den heute gebräuchlichen Treibmitteln wie z.B. Propan, Dimethylether (DME) oder Isobutan zu gross ist.

Ein weiterer Nachteil des bestehenden Systems ist die Gegebenheit, dass die beiden Entnahmeöffnungen auf der Ventilaussenseite nebeneinander angebracht sind. Dies verlangt bereits bei der Fertigung einen besonderen Aufwand bei der Begasung bzw. Befüllung der einzelnen Komponenten. In der Regel werden flüssige Komponente direkt in die Dosen eingefüllt, und danach werden die Dosen durch das Ventil verschlossen und im Anschluss durch das Ventil begast. Aerosolbefüllmaschinen können in Folge der runden Aerosoldose immer nur mittig zentriert von oben begast bzw. befüllt werden, da die Position der Dose während der Produktion nicht konstant gleichbleibend ist. Daher ist es nur mit einem erheblichen technischen Aufwand möglich, die Aerosoldose automatisiert über die passende Ventilposition mit Treibmittel zu befüllen.

Dieses Problem wurde dahingehend gelöst, dass man nach dem Verpressen («crimpen») des Ventils einen Fülladapter händisch auf das Ventil aufbringt, wodurch eine mittig zentrierte Begasung des Treibmittels möglich wird. Dieser Adapter muss aber nach dem Begasen wieder von Hand entfernt werden.

Auch die praktische Anwendung des Produktes verlangt eine besondere Aufmerksamkeit beim Aufsetzen des Applikationsadapters, indem man darauf achtet, dass die beiden Entnahmestifte im Adapter richtig im Ventil positioniert werden, um Fehlfunktionen zu vermeiden. Zur Hilfestellung (besseren Orientierung) ist an der Auslöseeinrichtung meist eine Pfeilmarkierung angebracht, oder es ist ein Sicherungsstift vorgesehen, welcher ein verkehrtes Aufsetzen verhindert.

### Darstellung der Erfindung

Daher ist es eine Aufgabe der Erfindung, ein verbessertes gattungsgemässes Ventil bereitzustellen. Es ist weiterhin eine Aufgabe der Erfindung, ein verbessertes Befüllverfahren für Zwei-Medienkomponenten-Entnahmesysteme bereitzustellen. Die Lösungen dieser Aufgaben sind durch die Merkmale des Anspruchs 1 bzw. des Anspruchs 15 definiert.

Die vorliegende Erfindung betrifft ein Ventil zum Befüllen und/oder Begasen einer ersten Medienkomponente in einen ersten Behälter und einer zweiten Medienkomponente in einen zweiten Behälter, der im Inneren des ersten Behälters anordenbar ist, insbesondere angeordnet ist, und zur simultanen Entnahme der beiden Medienkomponenten aus den beiden Behältern, wobei das Ventil aufweist: (a) ein Ventilgehäuse mit einer Längsachse und aufweisend einen ersten Anschluss zum Anschliessen des Ventils an dem ersten Behälter, mindestens einen lateralen Gehäusedurchlass, eine erste Ventilöffnung, einen zweiten Anschluss zum Anschliessen des Ventils an dem zweiten Behälter und eine zweite Ventilöffnung, (b) eine erste Verschlusshülse, die innerhalb des Ventilgehäuses so gelagert ist, dass sie entlang der Längsachse und gegenüber dem Ventilgehäuse hin- und herverschiebbar ist zwischen einer Schliessstellung, in der die erste Verschlusshülse die erste Ventilöffnung verschliesst, und einer Öffnungsstellung, in der die erste Verschlusshülse die erste Ventilöffnung ganz oder teilweise freigibt und der laterale Gehäusedurchlass somit Zugang zur ersten Ventilöffnung erhält, (c) eine zweite Verschlusshülse, die abschnittsweise innerhalb der ersten Verschlusshülse und abschnittsweise innerhalb des Ventilgehäuses so gelagert ist, dass sie entlang der Längsachse und gegenüber der ersten Verschlusshülse und dem Ventilgehäuse hin- und herverschiebbar ist zwischen einer Schliessstellung, in der die zweite Verschlusshülse die zweite Ventilöffnung verschliesst, und einer Öffnungsstellung, in der die zweite Verschlusshülse die zweite Ventilöffnung ganz oder teilweise freigibt und der zweite Anschluss somit Zugang zur zweiten Ventilöffnung erhält, (d) ein erstes Federelement, das so angeordnet und ausgebildet ist, dass es die erste Verschlusshülse durch eine erste Vorspannkraft in der Schliessstellung hält, und (e) ein zweites Federelement, das so angeordnet und ausgebildet ist, dass es die zweite Verschlusshülse durch eine zweite Vorspannkraft in der Schliessstellung hält.

Insbesondere umschliesst der erste Behälter den zweiten Behälter und einen Grossteil des Ventils.

Insbesondere kann das Ventilgehäuse einteilig oder mehrteilig ausgeführt sein. Bevorzugt kann dabei beispielsweise der zweite Anschluss als Einzelteil, d.h. in seinen Eigenschaften speziell zum Anschliessen am zweiten Behälter, hergestellt, aber dann starr und verschlussdicht mit dem Rest des Ventilgehäuses verbunden sein.

Insbesondere weist der erste Anschluss Elemente oder Wirkbereiche auf, mittels derer eine dichte, und insbesondere unlösbare, Verbindung mit dem ersten Behälter herstellbar ist. Beispielsweise ist am ersten Anschluss ein erster metallischer Kragen vorgesehen, der zum Eingehen einer form- und/oder stoffschlüssigen Verbindung mit einem zweiten metallischen Kragen des ersten Behälters ausgebildet ist. Auch kann der erste Anschluss eine druckstabile Form aufweisen.

Insbesondere weist das Ventilgehäuse eine grundsätzlich zylindrische Form auf, im Speziellen mit einem oder mehreren äusseren Absätzen bzw. Stufen. Die Längsachse definiert die Rotationsachse der grundsätzlichen Zylinderform. Das Ventilgehäuse ist nicht zwangsläufig rotationssymmetrisch. Bevorzugt bildet das Ventilgehäuse im Inneren einen ebenfalls im Wesentlichen Zylindrischen, mit Absätzen versehenen, Hohlraum.

Insbesondere ist der mindestens eine laterale Gehäusedurchlass ausgebildet als ein Durchbruch in der Aussenhülle eines Mittelbereichs des Ventilgehäuses. Speziell kann dies als eine Bohrung oder eine radial gleichmässig verteilte Menge an Bohrungen in den Mantel des Ventilgehäuses sein.

Insbesondere ist die erste Ventilöffnung im Inneren des Ventilgehäuses angeordnet und, im Speziellen, dort durch einen radialen Absatz an der Innenmantelfläche des Ventilgehäuses definiert.

Insbesondere liegt die erste Verschlusshülse mit einem stirnseitigen Absatz in der Schliessstellung auf diesem radialen Absatz dichtend auf.

Insbesondere wird dieser Kontakt in der Öffnungsstellung aufgelöst und die erste Medienkomponente kann durch die damit freiwerdende ringförmige Ventilöffnung via den lateralen Gehäusedurchlass strömen.

Insbesondere ist die Hin- und Herverschiebbarkeit der ersten Verschlusshülse dadurch bereitgestellt, dass die erste Verschlusshülse durch das erste Federelement elastisch gelagert ist und an einer äusseren Oberfläche der zweiten Verschlusshülse geführt ist. Diese Führung kann etwa durch ein Dichtelement realisiert sein, welches gleichzeitig zum Abdichten des Ventils vorgesehen ist.

Insbesondere ist die zweite Ventilöffnung im Inneren des Ventilgehäuses angeordnet und, im Speziellen, dort durch einen radialen Absatz an der Innenmantelfläche des Ventilgehäuses definiert.

Insbesondere liegt die zweite Verschlusshülse mit einem stirnseitigen Absatz in der Schliessstellung auf diesem radialen Absatz dichtend auf.

Insbesondere wird dieser Kontakt in der Öffnungsstellung aufgelöst und die zweite Medienkomponente kann durch die damit freiwerdende ringförmige Ventilöffnung via den zweiten Anschluss strömen.

Insbesondere ist die Hin- und Herverschiebbarkeit der zweiten Verschlusshülse dadurch bereitgestellt, dass die zweite Verschlusshülse durch an einer inneren Oberfläche des Ventilgehäuses und an einer inneren Oberfläche der ersten Verschlusshülse geführt ist. Diese Führung kann etwa durch entsprechend angeordnete Dichtelemente realisiert sein, welche gleichzeitig zum Abdichten des ersten Behälters vom zweiten Behälter bzw. zum Abdichten des Ventils vorgesehen ist.

Insbesondere weisen die erste Vorspannkraft und zweite Vorspannkraft einen zur Längsachse parallelen Richtungsvektor auf.

In manchen Ausführungsformen ist, bezüglich der Längsachse, der erste Anschluss an einem ersten Ende des Ventilgehäuses angeordnet und der zweite Anschluss an einem dem ersten Ende gegenüberliegenden zweiten Ende.

Insbesondere ist der zweite Anschluss durch einen Zapfen am zweiten Ende des Ventilgehäuses gebildet, welcher für einen Befestigungsmechanismus ausgebildet ist. Im Speziellen kann der zweite Anschluss ein Gewinde aufweisen, das zum Zusammenwirken mit einem Gewinde am oder im zweiten Behälter vorgesehen ist.

Insbesondere kann der zweite Anschluss auch ein Dichtelement aufweisen, insbesondere einen O-Ring, der am zweiten Behälter anliegt, wenn dieser angeschlossen ist.

Insbesondere ragt am ersten Ende des Ventils ein Ende der ersten Verschlusshülse und/oder in Ende der zweiten Verschlusshülse aus dem Ventil heraus.

In manchen Ausführungsformen ist das erste Federelement ebenfalls als Dichtelement ausgebildet, und enthält insbesondere ein thermoplastisches Elastomer oder ein Elastomer, im Speziellen ein Gummi.

Insbesondere ist das erste Federelement im Wesentlichen rohrabschnittsförmig. Das erste Federelement ist insbesondere derartig gestaltet, dass es bei einer Kompression entlang der Längsachse einen nach aussen gerichteten Bauch bildet.

In manchen Ausführungsformen ist das erste Federelement zwischen einem aus dem Ventilgehäuse herausragenden Absatz der ersten Verschlusshülse und einem Aussenbereich des Ventilgehäuses angeordnet.

Insbesondere ist das erste Federelement unter einer vorgegebenen Druckspannung zwischen dem besagten Verschlusshülsenabsatz und dem Ventilgehäuseaussenbereich angeordnet, d.h. sozusagen eingeklemmt. Diese Vorspannung bzw. Druckspannung presst die erste Verschlusshülse an die erste Ventilöffnung, wodurch diese verschlossen bleibt.

In manchen Ausführungsformen ist das zweite Federelement zwischen einer Stirnseite der zweiten Verschlusshülse und einem inneren Absatz des Ventilgehäuses angeordnet.

Insbesondere ist das zweite Federelement als Spiralfeder ausgebildet, wodurch die zweite Medienkomponente durch die Windungen der Spiralfeder hindurchströmen kann. Es ist auch der Einsatz anderer Federelemente, welche ähnlich durchströmbar sind, möglich.

In manchen Ausführungsformen weist die erste Verschlusshülse ein erstes Dichtungselement, insbesondere eine Lamellendichtung, zum Verschliessen der ersten Ventilöffnung auf. Selbstverständlich ist auch der Einsatz anderer Federelemente, welche derart durchlässig sind, möglich.

In manchen Ausführungsformen weist die zweite Verschlusshülse ein zweites Dichtungselement, insbesondere eine Lamellendichtung, zum Verschliessen der zweiten Ventilöffnung auf.

In manchen Ausführungsformen weist die erste Verschlusshülse mindestens einen ersten lateralen Hülsendurchlass auf, der in der Öffnungsstellung der ersten Verschlusshülse Zugang zur ersten Ventilöffnung erhält und zu mindestens einem, zur Längsachse parallelen und zwischen erster Verschlusshülse und zweiter Verschlusshülse gelegenen ersten Kanal führt.

Insbesondere ist der mindestens eine erste laterale Hülsendurchlass als Querbohrung oder Schrägbohrung in der ersten Verschlusshülse vorgesehen. Diese mindestens eine Bohrung führt dann zum Innenraum der rohrförmigen bzw. hohlzylindrischen ersten Verschlusshülse. Da an dieser Stelle die zweite, ebenfalls im Wesentlichen rohrförmige, Verschlusshülse in den Innenraum der ersten Verschlusshülse eingeschoben ist, wird der erste Kanal definiert durch die entsprechende Aussenwand der zweiten Verschlusshülse und die Innenwand der ersten Verschlusshülse.

Insbesondere ist der erste Kanal als ein zylindrischer Hohlraum ausgebildet. Alternativ kann ein solcher zylindrischer Hohlraum durch Rippen geteilt werden, wodurch eine Vielzahl an ersten Kanälen definiert werden.

In manchen Ausführungsformen weist die zweite Verschlusshülse mindestens einen zweiten lateralen Hülsendurchlass auf, der in der Öffnungsstellung der zweiten Verschlusshülse Zugang zur zweiten Ventilöffnung erhält und zu mindestens einem, zur Längsachse parallelen oder konzentrischen und im Inneren der zweiten Verschlusshülse gelegenen zweiten Kanal führt.

Insbesondere ist der mindestens eine zweite laterale Hülsendurchlass als Querbohrung oder Schrägbohrung in der zweiten Verschlusshülse vorgesehen. Diese mindestens eine Bohrung führt dann zum Innenraum der rohrförmigen bzw. hohlzylindrischen zweiten Verschlusshülse. Der zweite Kanal kann somit als der Innenraum der zweiten Verschlusshülse verstanden werden.

In manchen Ausführungsformen mündet der mindestens eine erste Kanal in mindestens einer ersten Mündung aussen am Ventil, wobei der mindestens eine zweite Kanal in mindestens einer zweiten Mündung aussen am Ventil mündet.

Insbesondere ragt die zweite Mündung über die erste Mündung hinaus, wodurch eine vereinfachte separate Befüllung der Behälter mit den Medienkomponenten erfolgen kann.

Die Erfindung betrifft weiterhin eine Zwei-Medienkomponenten-Entnahmeeinheit, aufweisend das Ventil nach der Beschreibung hierin und mindestens eines von: einem Entnahmeaktuator und dem zweiten Behälter.

Insbesondere ist der zweite Behälter zylindrisch und derartig dimensioniert, dass er - ebenso wie das Ventil - durch eine Öffnung im ersten Behälter hindurchpasst, welche später mit dem ersten Anschluss verbunden wird.

In manchen Ausführungsformen, in denen die Zwei-Medienkomponenten-Entnahmeeinheit den Entnahmeaktuator aufweist, ist der Entnahmeaktuator auf die jeweiligen besagten Mündungen aufsteckbar, wobei der Entnahmeaktuator im aufgesteckten Zustand mit einer ersten Kontaktfläche an der ersten Mündung anliegt und mit einer zweiten Kontaktfläche an der zweiten Mündung anliegt.

Insbesondere wird durch diese gleichsame Kontaktierung ermöglicht, dass bei Betätigung des Entnahmeaktuators beide Ventilöffnungen simultan in die Öffnungsstellung gelangen.

In manchen Ausführungsformen weist der Entnahmeaktuator einen Durchmischungsraum, einen ersten Entnahmeaktuatorkanal und einen zweiten Entnahmeaktuatorkanal auf, wobei der erste Entnahmeaktuatorkanal von der ersten Kontaktfläche zum Durchmischungsraum führt und der zweite Entnahmeaktuatorkanal von der zweiten Kontaktfläche zum Durchmischungsraum führt.

Insbesondere erfahren der erste und der zweite Entnahmeaktuatorkanal eine Umlenkung, die im Speziellen 90° zur Längsachse sein kann, und führen erst dann zum Durchmischungsraum, wo die beiden Medienkomponenten zusammengelangen und durchmischt werden und insbesondere bereits anfangen, chemisch miteinander zu reagieren.

Insbesondere kann der Entnahmeaktuator eine Sprühkappe sein oder als eine Pistole bzw. deren Bestandteil ausgeführt sein.

In manchen Ausführungsformen ist im ersten Entnahmeaktuatorkanal und/oder im zweiten Entnahmeaktuatorkanal eine Drossel angeordnet, welche einen Volumenstrom der jeweiligen Komponente beeinflusst. Insbesondere ist dabei nur im ersten Entnahmeaktuatorkanal eine Drossel angeordnet.

Die Erfindung betrifft weiterhin ein Zwei-Medienkomponenten-Entnahmesystem, aufweisend die Zwei-Medienkomponenten-Entnahmeeinheit, den ersten Behälter und den zweiten Behälter.

Insbesondere ist also das Zwei-Medienkomponenten-Entnahmesystem sozusagen als die komplette 2K-Dose zu verstehen oder als eine 2K-Dose ohne Sprühkappe bzw. Pistole (d.h. Entnahmeaktuator).

Insbesondere ist der zweite Behälter kleiner als der erste Behälter.

In einer beispielhaften Ausführungsform hat das Zwei-Medienkomponenten-Entnahmesystem zudem einen Hebel, welcher derart angeordnet ist, dass dadurch eine Bewegung des Entnahmeaktuators übersetzt wird. Dies erlaubt es einem Benutzer, eine präzisere Bedienung des Entnahmeaktuators zu erreichen.

Die Erfindung betrifft weiterhin ein Befüllverfahren eines solchen Zwei-Medienkomponenten-Entnahmesystems, welches die folgenden Schritte aufweist: (a) Aufsetzen eines ersten Befüllanschlusses auf die erste Mündung, (b) Überwinden der ersten Vorspannkraft durch Herunterdrücken des ersten Befüllanschlusses, wobei der erste Befüllanschluss die zweite Mündung nicht berührt, (c) Einfüllen mindestens eines Treibgases in den ersten Behälter, insbesondere zusammen mit der ersten Medienkomponente, (d) Abnehmen des ersten Befüllanschlusses von der erste Mündung, wodurch die erste Ventilöffnung wieder schliesst, (e) Aufsetzen eines zweiten Befüllanschlusses auf die zweite Mündung, (f) Überwinden der zweiten Vorspannkraft durch Herunterdrücken des zweiten Befüllanschlusses, wobei der zweite Befüllanschluss die erste Mündung nicht berührt, (g) Einfüllen mindestens eines Treibgases in den zweiten Behälter, insbesondere zusammen mit der zweiten Medienkomponente, und (h) Abnehmen des zweiten Befüllanschlusses von der zweiten Mündung, wodurch die zweite Ventilöffnung wieder schliesst.

Insbesondere kann ein allfällig noch aufgesteckter Entnahmeaktuator vor Schritt (a) noch abgesteckt werden.

Insbesondere können die erste Medienkomponente und/oder die zweite Medienkomponente vor einem Anordnen des Ventils auf dem ersten Behälter und/oder dem zweiten Behälter befüllt werden, sodass nach dem Anordnen des Ventils auf dem ersten und/oder zweiten Behälter nur das mindestens eine Treibgas durch das Ventil befüllt wird.

Insbesondere ist der erste Befüllanschluss mit einem Absatz ausgestattet, der ausgebildet ist zum Anstossen auf die Stirnseite der ersten Verschlusshülse im Bereich der ersten Mündung. Im Speziellen dichtet an dieser Stelle ein Dichtelement von der Umgebung ab.

Insbesondere ist der erste Befüllanschluss weiterhin mit einem derartig ausgeformten Inneren ausgestattet, dass darin die allfällig herausragende zweite Mündung einsinken kann, ohne dass auf diese parallel der Längsachse Druck ausgeübt würde. Das Herunterdrücken des ersten Befüllanschlusses drückt also wirklich nur die erste Verschlusshülse herunter, öffnet dabei die erste Ventilöffnung. Die zweite Verschlusshülse bleibt unbewegt und die zweite Ventilöffnung somit verschlossen. Damit kann die vom ersten Befüllanschluss abgegebene Medienkomponente lediglich in den ersten Behälter eingefüllt werden. Der erste Befüllanschluss wird zurückgezogen, die erste Verschlusshülse folgt, d.h. verschiebt sich zurück und die Vorspannung (Druckspannung) des ersten Federelements hält die erste Ventilöffnung wieder verschlossen.

Insbesondere ist der zweite Befüllanschluss ebenfalls mit einem Absatz ausgestattet, der ausgebildet ist zum Anstossen auf die Stirnseite der zweiten Verschlusshülse im Bereich der zweiten Mündung. Im Speziellen dichtet an dieser Stelle ein Dichtelement von der Umgebung ab.

Insbesondere ragt die zweite Mündung mit einem Abstand zur ersten Verschlusshülse aus dem Ventil heraus, der grösser ist als der maximale Verstellweg der zweiten Verschlusshülse. Damit ist gewährleistet, dass der zweite Befüllanschluss nicht in Kontakt mit der ersten Mündung gerät, sodass also die erste Verschlusshülse unbetätigt bleibt nur die zweite Ventilöffnung geöffnet wird. Damit kann die vom zweiten Befüllanschluss abgegebene Medienkomponente lediglich in den zweiten Behälter eingefüllt werden. Der zweite Befüllanschluss wird zurückgezogen, die zweite Verschlusshülse folgt, d.h. verschiebt sich zurück und die Vorspannung (Druckspannung) des zweiten Federelements hält die erste Ventilöffnung wieder verschlossen.

Insbesondere sind die erste Mündung und die zweite Mündung rotationssymmetrisch geformt und/oder angeordnet. Dies erleichtert die Befüllung und die Montage des Entnahmeaktuators, weil die Ausrichtung (Drehstellung) des Behälters keine Rolle spielt.

Insbesondere verhalten sich die erste Mündung und die zweite Mündung genau konzentrisch zu einem Zylindermantel (Aussendurchmesser) des ersten Behälters.

In anderen Worten ausgedrückt, lässt sich die Erfindung weiterhin wie folgt beschreiben:
Die vorliegende Erfindung ermöglicht den Einsatz moderner Materialien sowie Abdichtungssysteme, und damit eine Verträglichkeit mit allen gebräuchlichen Treibmitteln. Im Besonderen reduziert die Lamellendichtung den Gasverlust auf ein Minimum. Ebenso ist mit der Lamellendichtung ein Verkleben des Ventils ausgeschlossen.

Ein weiterer Vorteil liegt darin, dass die Entnahmeöffnungen bzw. Mündungen mittig zentriert ausgebildet sind. Dadurch ist beim Begasungsprozess wie auch beim Entnahmeprozess eine spezielle Positionierung eines Entnahmeaktuators nicht erforderlich.

Bei der Herstellung eines Aerosolproduktes ermöglicht das Ventil durch seine Bauart, dass die beiden Komponenten einzeln begast werden können, da es technisch möglich ist, die einzelnen Ventilbereiche einzeln zu betätigen. Alternativ können auch beide Komponenten gleichzeitig begast werden.

Solche 2K-Ventilsysteme bieten den besonderen Vorteil, dass die beiden Komponenten erst ausserhalb der Aerosoldose gemischt werden und somit die Dose mehrfach verwendet werden kann (abstellbares System). Infolgedessen kann eine Aerosolverpackung, welche solch ein Ventil enthält, auch für grosse Volumen (ca. 750 ml) verwendet werden. Bestehende 2K-Systemen, welche innerhalb der Aerosoldose gemischt werden, haben in der Regel ein maximales Volumen von 400 ml.

Das Ventil ist zum Ausbringen von zwei flüssigen Medienkomponenten ausgebildet, welche sich in einem jeweiligen Druckbehälter befinden und durch ein Treibmittel ausgetragen werden. Die eine Komponente befindet sich im äusseren Druckbehälter und die weitere Komponente befindet sich in einem separaten Behälter innerhalb des äusseren Druckbehälters, welcher am Ventil befestigt ist.

Beim Aktivieren des Ventils öffnen sich beide Kammern gleichzeitig und die flüssigen Komponenten treten über die Ventilöffnung ausserhalb des Druckbehälters in den Entnahmeadapter, in welchem sich die beiden Komponenten erstmalig vermischen. An der Düse des Entnahmeaktuators kann ein Applikationsschlauch angebracht sein, in welchem eine weitere Durchmischung erfolgt und durch welchen das Gemisch nach aussen gelangt.

### Kurze Beschreibung der Zeichnungen

Weitere Vorteile der vorliegenden Erfindung sind aus der detaillierten Beschreibung und den Zeichnungen ersichtlich.
Figur 1 zeigt eine Schnittdarstellung einer bevorzugten Ausführungsform des erfindungsgemässen Ventils;
Figur 2 zeigt das Ventil aus Figur 1 und Ausschnitte des ersten und zweiten Behälters;
Figur 3 zeigt das Ventil aus Figur 1 und Figur 2 mit angeschlossenen ersten und zweiten Behältern mit entsprechender Füllung sowie einer Sprühkappe als Entnahmeaktuator; und
Figur 4 zeigt ein Zwei-Medienkomponenten-Entnahmesystem (wie aus Figur 3 nur ohne Entnahmeaktuator) und zwei Befüllanschlüsse, mit denen die beiden Medienkomponenten separat eingefüllt werden können.

### Wege zur Ausführung der Erfindung

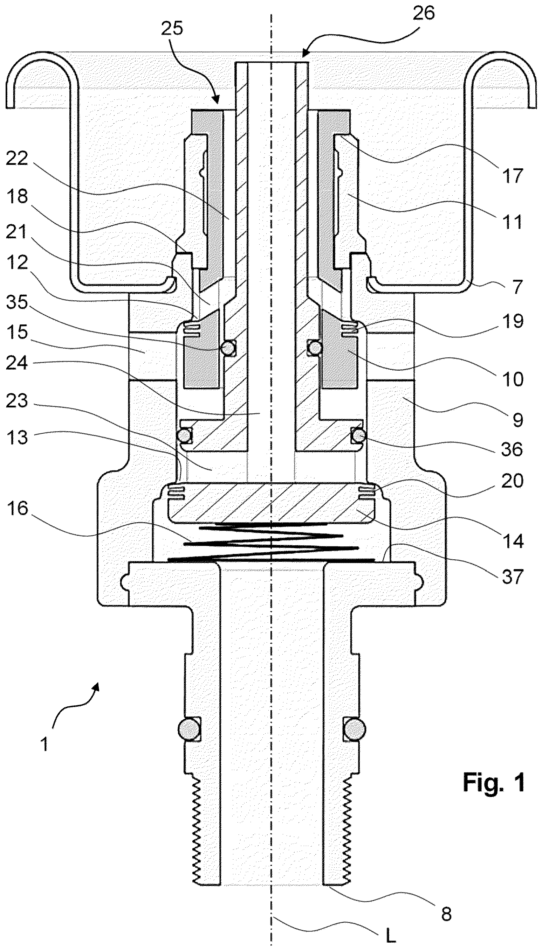

Figur 1 zeigt eine Schnittdarstellung einer bevorzugten Ausführungsform des erfindungsgemässen Ventils 1. Das Ventil 1 erstreckt sich prinzipiell entlang der Längsachse L. Ein erster Anschluss 7 befindet sich am oberen Ende des Ventils und dient der Befestigung bzw. dem Anschluss an einem ersten Behälter. Der zweite Anschluss 8 am gegenüberliegenden, unteren Ende dient der Befestigung bzw. dem Anschluss an einem zweiten Behälter, der kleiner ist als der erste Behälter. Der zweite Behälter kann somit im ersten Behälter versenkt bzw. untergebracht werden, wobei nach Aussen hin der Anschein einer einzelnen Dose besteht.

Generell weist das Ventil 1 ein Ventilgehäuse 9 auf, das grob gesagt alle weiteren Komponenten beherbergt. Der erste 7 und der zweite Anschluss 8 sind als Bestandteil des Ventilgehäuses 9 zu verstehen. Hier ist das Ventilgehäuse mehrstückig bzw. mehrteilig ausgebildet, wobei in anderen Ausführungen auch eine Einstückigkeit oder Zweistückigkeit (etwa als 3D-Druck) möglich ist.

Innerhalb des Gehäuses 9 sind zwei Bauteile 10 und 14 gegenüber dem Gehäuse 9 und gegenüber sich selbst verschiebbar angeordnet. Die erste Verschlusshülse 10 ist einerseits (elastisch) gelagert durch das erste Federelement 11 andererseits geführt durch den in der zweiten Verschlusshülse 14 eingelassenen O-Ring 35. Das erste Federelement 11 ist dort mit einer definierten Druckkraft eingepresst, damit es die erste Verschlusshülse 10 anhand des herausragenden Absatzes 17 permanent nach oben andrückt. Damit wird das erste Dichtungselement 19 gegen die erste Ventilöffnung 12 gepresst, die erste Ventilöffnung 12 somit verschlossen.

Teils innerhalb der ersten Verschlusshülse 10 und teils direkt innerhalb des Ventilgehäuses 9 ist die zweite Verschlusshülse 14 geführt. Die zweite Verschlusshülse 14 kann einerseits mit dem O-Ring 36 an der Innenwand des Gehäuses 9 abgleiten, und andererseits mit dem O-Ring 35 an der Innenwand der ersten Verschlusshülse 10. Das zweite Federelement 16 ist unter einer definierten Vorspannung zwischen der zweiten Verschlusshülse 14 und dem Innenabsatz 37 des Gehäuses 9 eingeklemmt. Dadurch wird das zweite Dichtungselement 20 gegen die zweite Ventilöffnung 13 gepresst, die zweite Ventilöffnung 13 somit verschlossen.

Das Besondere an dieser Konstruktion ist, dass sich die erste Verschlusshülse 10 und die zweite Verschlusshülse 14 separat und unabhängig voneinander von der gezeigten Schliessstellung in eine Öffnungsstellung verstellen lassen.

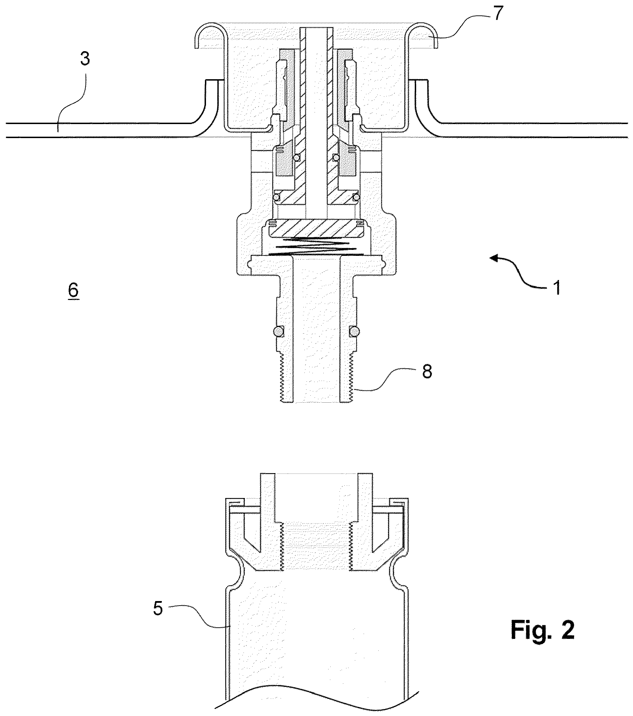

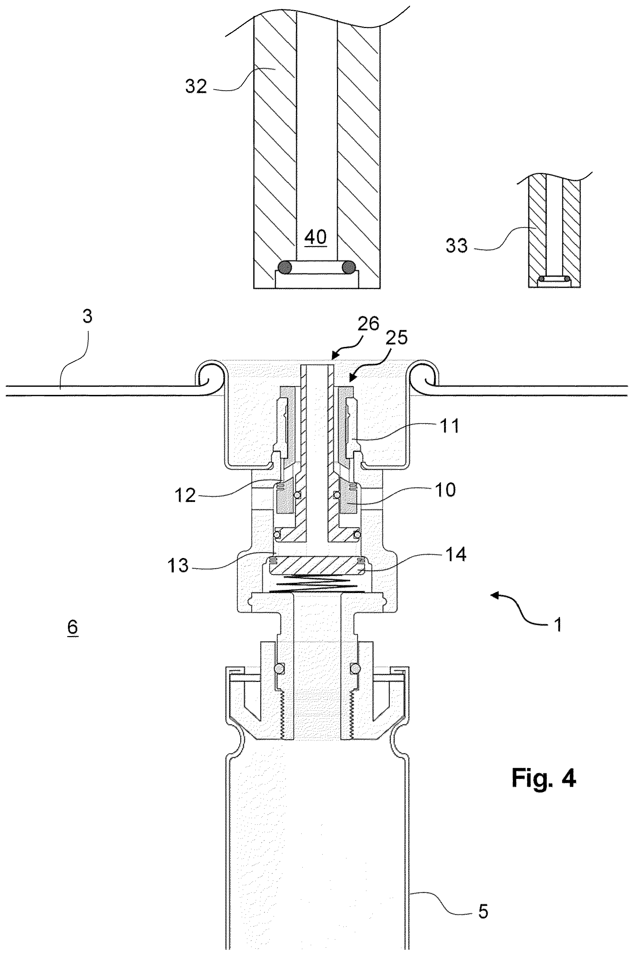

Figur 2 das Ventil aus Figur 1 und Ausschnitte des ersten 3 und zweiten Behälters 5. Angedeutet ist, dass der zweite Anschluss 8 anhand der Schraubgewinde mit dem zweiten Behälter 5 zu verbinden ist und anschliessend in den ersten Behälter 3 eingelassen wird. Dann ist der erste Anschluss 7 mit dem Kragen des ersten Behälters 3 zu verbinden (z.B. durch «crimpen»). Dadurch entsteht ein Zwei-Medienkomponenten-Entnahmesystem, das zu einer Befüllstation gebracht werden kann (siehe später in Figur 4).

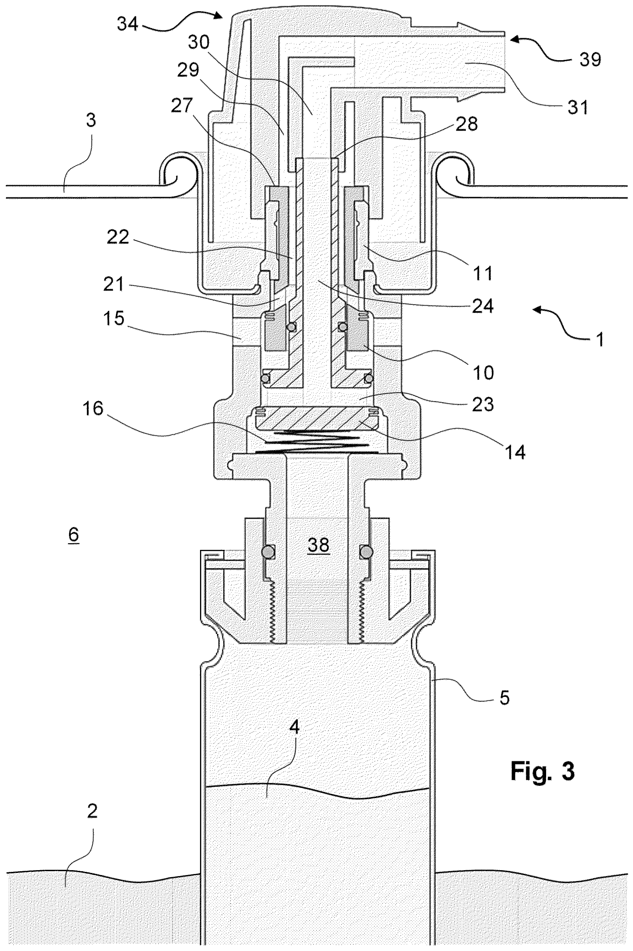

Figur 3 zeigt das Ventil aus Figur 1 und Figur 2 mit angeschlossenen ersten und zweiten Behältern 3 und 5 mit entsprechender Füllung 2 und 4 sowie einem Entmahmeaktuator 34 als Entnahmeaktuator. Die Sprühkappe weist einen Durchmischungsraum 31 auf, zu welchem zwei Entnahmeaktuatorkanäle 29 und 30 führen. Kanal 29 erhält dadurch Zugang zum Innenraum 6 des ersten Behälters 3, dass durch Drücken auf die Kappe 34 die erste Mündung an der ersten Kontaktfläche 27 heruntergedrückt wird, und der erste Hülsendurchlass 21 auf Höhe des Gehäusedurchlasses 15 gebracht wird. Ein Treibmittel im ersten Behälter 3 drückt die erste Medienkomponente 2 nun via den lateralen Gehäusedurchlass 15, den ersten Hülsendurchlass 21, den ersten Kanal 22, den ersten Entnahmeaktuatorkanal 29 in den Vermischungsraum 31.

Analog dazu wird bei Betätigung der Kappe 34 die zweite Mündung an der Kontaktfläche 28 heruntergedrückt, womit sich die zweite Verschlusshülse 14 nach unten verschiebt. Ein Treibmittel drückt im zweiten Behälter 5 die zweite Medienkomponente 4 via das Innere 38 des zweiten Anschlusses, das zweite Federelement 16, den zweiten Hülsendurchlass 23, den zweiten Kanal 24, den zweiten Entnahmeaktuatorkanal 30 in den Vermischungsraum 31.

Durch die Ausformung der Kappe 34 werden beide Verschlusshülsen simultan heruntergedrückt. Erst im Vermischungsraum 31 kommen die beiden Komponenten in Kontakt und können gemeinsam vermischt über die Düse 39 abgegeben werden. Oftmals ist auf der Düse 39 ein Rohr bzw. Röhrchen aufgesteckt (nicht dargestellt in dieser Figur).

Figur 4 zeigt ein Zwei-Medienkomponenten-Entnahmesystem (wie aus Figur 3 nur ohne Entnahmeaktuator) und zwei Befüllanschlüsse 32 und 33, mit denen die beiden Medienkomponenten 2 und 4 separat oder alternativ gleichzeitig eingefüllt werden können. Wenn der Anschluss 32 herunterfährt und an die erste Mündung 25 anstösst (an der Kontaktfläche 27, siehe Figur 3), wird die erste Verschlusshülse 10 so lange heruntergedrückt, bis die erste Ventilöffnung 12 in der Öffnungsstellung ist. Dabei kann die zweite Mündung 26 ungehindert in das Innere 40 des ersten Befüllanschlusses 32 eintauchen. Dann kann die erste Medienkomponente sowie ein Treibmittel in den ersten Behälter eingefüllt werden. Die Medienkomponente findet ihren Weg nicht in den zweiten Behälter, weil die zweite Verschlusshülse 14 die zweite Ventilöffnung 13 nach wie vor verschliesst. Durch Anheben des ersten Befüllanschlusses 32 wird die erste Verschlusshülse 10 durch die Vorspannung im ersten Federelement 11 wieder angehoben und die erste Ventilöffnung 12 verschlossen.

Mit dem zweiten Befüllanschluss 33, der hier im Abseits dargestellt ist, lässt sich an der zweiten Mündung 26 die zweite Verschlusshülse 14 singulär, d.h. unabhängig von der ersten Verschlusshülse 10, herunterdrücken und somit der zweite Behälter 5 dann mit zweiter Medienkomponente und Treibmittel befüllen. Durch Anheben des zweiten Befüllanschlusses 33 wird die zweite Verschlusshülse 14 durch die Vorspannung im zweiten Federelement wieder angehoben und die zweite Ventilöffnung 13 verschlossen.

Der Vorteil der Erfindung liegt insbesondere in der vereinfachten separaten Befüllung der Behälter und in der vereinfachten Installation eines Aktuators (auch Applikationsadapter genannt). Erzielt wird dieser Effekt durch die erfindungsgemässe Konstruktion, die rotationssymmetrische Mündungen, d.h. Ein- bzw. Ausgänge am Ventil erlaubt.

Die Erfindung wurde zwar anhand ihrer bevorzugten Ausführungsform(en) erläutert, doch es können viele weitere Änderungen und Variationen vorgenommen werden, ohne über den Umfang der vorliegenden Erfindung hinauszugehen. Daher ist es vorgesehen, dass die beiliegenden Patentansprüche Änderungen und Variationen abdecken, die im tatsächlichen Umfang der Erfindung enthalten sind.

**Bezugszeichenliste**

| | | | |
|---|---|---|---|
| 1 | Ventil | 24 | Zweiter Kanal |
| 2 | Erste Medienkomponente | 25 | Erste Mündung |
| 3 | Erster Behälter | 26 | Zweite Mündung |
| 4 | Zweite Medienkomponente | 27 | Erste Kontaktfläche |
| 5 | Zweiter Behälter | 28 | Zweite Kontaktfläche |
| 6 | Innere des ersten Behälters | 29 | Erster Entnahmeaktuatorkanal |
| 7 | Erster Anschluss | 30 | Zweiter Entnahmeaktuatorkanal |
| 8 | Zweiter Anschluss | 31 | Durchmischungsraum |
| 9 | Ventilgehäuse | 32 | Erster Befüllanschluss |
| 10 | Erste Verschlusshülse | 33 | Zweiter Befüllanschluss |
| 11 | Erstes Federelement | 34 | Entnahmeaktuator |
| 12 | Erste Ventilöffnung | 35 | O-Ring |
| 13 | Zweite Ventilöffnung | 36 | O-Ring |
| 14 | Zweite Verschlusshülse | 37 | Innenabsatz des Ventilgehäuses |
| 15 | Lateraler Gehäusedurchlass | 38 | Innere des zweiten Anschlusses |
| 16 | Zweites Federelement | 39 | Düse |
| 17 | Aus dem Ventilgehäuse herausragender Absatz | 40 | Innere des ersten Befüllanschlusses |
| 18 | Aussenbereich des Ventilgehäuses | L | Längsachse |
| 19 | Erstes Dichtungselement | | |
| 20 | Zweites Dichtungselement | | |
| 21 | Erste Hülsendurchlass | | |
| 22 | Erster Kanal | | |
| 23 | Zweiter Hülsendurchlass | | |

## Patentansprüche

1. Ventil (1) zum Befüllen und/oder Begasen einer ersten Medienkomponente (2) in einen ersten Behälter (3) und einer zweiten Medienkomponente (4) in einen zweiten Behälter (5), der im Inneren (6) des ersten Behälters (3) anordenbar ist, und zur simultanen Entnahme der beiden Medienkomponenten (2,4) aus den beiden Behältern (3,5), wobei das Ventil (1) aufweist:
ein Ventilgehäuse (9) mit einer Längsachse (L) und aufweisend einen ersten Anschluss (7) zum Anschliessen des Ventils (1) an dem ersten Behälter (3), mindestens einen lateralen Gehäusedurchlass (15), eine erste Ventilöffnung (12), einen zweiten Anschluss (8) zum Anschliessen des Ventils (1) an dem zweiten Behälter (5) und eine zweite Ventilöffnung (13),
eine erste Verschlusshülse (10), die innerhalb des Ventilgehäuses (9) so gelagert ist, dass sie entlang der Längsachse (L) und gegenüber dem Ventilgehäuse (9) hin- und herverschiebbar ist zwischen einer Schliessstellung, in der die erste Verschlusshülse (10) die erste Ventilöffnung (12) verschliesst, und einer Öffnungsstellung, in der die erste Verschlusshülse (10) die erste Ventilöffnung (12) ganz oder teilweise freigibt und der laterale Gehäusedurchlass (15) somit Zugang zur ersten Ventilöffnung (12) erhält,
eine zweite Verschlusshülse (14), die abschnittsweise innerhalb der ersten Verschlusshülse (10) und abschnittsweise innerhalb des Ventilgehäuses (9) so gelagert ist, dass sie entlang der Längsachse (L) und gegenüber der ersten Verschlusshülse (10) und dem Ventilgehäuse (9) hin- und herverschiebbar ist zwischen einer Schliessstellung, in der die zweite Verschlusshülse (14) die zweite Ventilöffnung (13) verschliesst, und einer Öffnungsstellung, in der die zweite Verschlusshülse (14) die zweite Ventilöffnung (13) ganz oder teilweise freigibt und der zweite Anschluss (8) somit Zugang zur zweiten Ventilöffnung (13) erhält,
ein erstes Federelement (11), das so angeordnet und ausgebildet ist, dass es die erste Verschlusshülse (10) durch eine erste Vorspannkraft in der Schliessstellung hält, und
ein zweites Federelement (16), das so angeordnet und ausgebildet ist, dass es die zweite Verschlusshülse (14) durch eine zweite Vorspannkraft in der Schliessstellung hält.

2. Ventil (1) nach Anspruch 1, wobei, bezüglich der Längsachse (L), der erste Anschluss (7) an einem ersten Ende des Ventilgehäuses (9) angeordnet ist und der zweite Anschluss (8) an einem dem ersten Ende gegenüberliegenden zweiten Ende.

3. Ventil (1) nach einem der vorangehenden Ansprüche, wobei das erste Federelement (11) ebenfalls als Dichtelement ausgebildet ist, und insbesondere ein Elastomer oder ein thermoplastisches Elastomer enthält.

4. Ventil (1) nach einem der vorangehenden Ansprüche, wobei das erste Federelement (11) zwischen einem aus dem Ventilgehäuse (9) herausragenden Absatz (17) der ersten Verschlusshülse (10) und einem Aussenbereich (18) des Ventilgehäuses (9) angeordnet ist.

5. Ventil (1) nach einem der vorangehenden Ansprüche, wobei das zweite Federelement (16) zwischen einer Stirnseite der zweiten Verschlusshülse und einem inneren Absatz des Ventilgehäuses (37) angeordnet ist.

6. Ventil (1) nach einem der vorangehenden Ansprüche, wobei die erste Verschlusshülse (10) ein erstes Dichtungselement (19), insbesondere eine Lamellendichtung, zum Verschliessen der ersten Ventilöffnung (12) aufweist.

7. Ventil (1) nach einem der vorangehenden Ansprüche, wobei die zweite Verschlusshülse (14) ein zweites Dichtungselement (20), insbesondere eine Lamellendichtung, zum Verschliessen der zweiten Ventilöffnung (13) aufweist.

8. Ventil (1) nach einem der vorangehenden Ansprüche, wobei die erste Verschlusshülse (10) mindestens einen ersten lateralen Hülsendurchlass (21) aufweist, der in der Öffnungsstellung der ersten Verschlusshülse (10) Zugang zur ersten Ventilöffnung (12) erhält und zu mindestens einem, zur Längsachse (L) parallelen und zwischen erster Verschlusshülse (10) und zweiter Verschlusshülse (14) gelegenen ersten Kanal (22) führt.

9. Ventil (1) nach einem der vorangehenden Ansprüche, wobei die zweite Verschlusshülse (14) mindestens einen zweiten lateralen Hülsendurchlass (23) aufweist, der in der Öffnungsstellung der zweiten Verschlusshülse (14) Zugang zur zweiten Ventilöffnung (13) erhält und zu mindestens einem, zur Längsachse (L) parallelen oder konzentrischen und im Inneren der zweiten Verschlusshülse (14) gelegenen zweiten Kanal (24) führt.

10. Ventil (1) nach den Ansprüchen 8 und 9, wobei der mindestens eine erste Kanal (22) in mindestens einer ersten Mündung (25) aussen am Ventil (1) mündet und wobei der mindestens eine zweite Kanal (24) in mindestens einer zweiten Mündung (26) aussen am Ventil (1) mündet.

11. Zwei-Medienkomponenten-Entnahmeeinheit, aufweisend das Ventil (1) nach einem der vorangehenden Ansprüche und mindestens eines von: einem Entnahmeaktuator (34) und dem zweiten Behälter (5).

12. Zwei-Medienkomponenten-Entnahmeeinheit nach Anspruch 11, aufweisend den Entnahmeaktuator (34) und das Ventil (1) nach Anspruch 10, wobei der Entnahmeaktuator (34) auf die jeweiligen Mündungen (25,26) aufsteckbar ist und im aufgesteckten Zustand mit einer ersten Kontaktfläche (27) an der ersten Mündung (25) anliegt und mit einer zweiten Kontaktfläche (28) an der zweiten Mündung (26) anliegt.

13. Zwei-Medienkomponenten-Entnahmeeinheit nach Anspruch 12, wobei der Entnahmeaktuator (34) einen Durchmischungsraum (31), einen ersten Entnahmeaktuatorkanal (29) und einen zweiten Entnahmeaktuatorkanal (30) aufweist, wobei der erste Entnahmeaktuatorkanal (29) von der ersten Kontaktfläche (27) zum Durchmischungsraum (31) führt und der zweite Entnahmeaktuatorkanal (30) von der zweiten Kontaktfläche (28) zum Durchmischungsraum (31) führt.

14. Zwei-Medienkomponenten-Entnahmesystem, aufweisend die Zwei-Medienkomponenten-Entnahmeeinheit nach einem der Ansprüche 1 bis 13, den ersten Behälter (3) und den zweiten Behälter (5).

15. Befüllverfahren eines Zwei-Medienkomponenten-Entnahmesystems nach Anspruch 14, mit den Schritten:
Aufsetzen eines ersten Befüllanschlusses (32) auf die erste Mündung (25),
Überwinden der ersten Vorspannkraft durch Herunterdrücken des ersten Befüllanschlusses (32), wobei der erste Befüllanschluss (32) die zweite Mündung (26) nicht berührt,
Einfüllen mindestens eines Treibgases in den ersten Behälter (3), insbesondere zusammen mit der ersten Medienkomponente (2),
Abnehmen des ersten Befüllanschlusses (32) von der ersten Mündung (25), wodurch die erste Ventilöffnung (12) wieder schliesst,
Aufsetzen eines zweiten Befüllanschlusses (33) auf die zweite Mündung (26),
Überwinden der zweiten Vorspannkraft durch Herunterdrücken des zweiten Befüllanschlusses (33), wobei der zweite Befüllanschluss (33) die erste Mündung (25) nicht berührt,
Einfüllen mindestens eines Treibgases in den zweiten Behälter (5), insbesondere zusammen mit der zweiten Medienkomponente (4), und
Abnehmen des zweiten Befüllanschlusses (33) von der zweiten Mündung (26), wodurch die zweite Ventilöffnung (13) wieder schliesst.
